# EUROPÄISCHE PATENTANMELDUNG

(11) **EP 4 703 303 A1**
(43) Veröffentlichungstag der Anmeldung: **04.03.2026**
(21) Anmeldenummer: 25198098.3
(22) Anmeldetag: 26.08.2025
(51) Int. Cl.: B65G 47/51, B65G 47/84

(54) **VERFAHREN UND SYSTEM ZUM AUSLEITEN MINDESTENS EINES AUSZULEITENDEN OBJEKTS**

(30) Priorität: 29.08.2024 DE 102024124634
(71) Anmelder: KHS GmbH, 44143 Dortmund (DE)
(72) Erfinder: Fritsche, Claas, 44143 Dortmund (DE); Lewin, Frank, 44143 Dortmund (DE)

(57) **Zusammenfassung**

Die Erfindung betrifft ein Verfahren (100) zum Ausleiten mindestens eines auszuleitenden Objekts, insbesondere eines Behälters, aus mindestens einer Transportvorrichtung (11-26), wobei eine erste Ausleitvorrichtung (28) mit mindestens einem ersten Ausleitbehälter (30) und eine zweite Ausleitvorrichtung (32) mit mindestens einem zweiten Ausleitbehälter (34) an der Transportvorrichtung (11-26) angeordnet sind, wobei die erste Ausleitvorrichtung (28) in einer Transportrichtung vor der zweiten Ausleitvorrichtung (32) angeordnet ist, umfassend zumindest die folgenden Schritte: Transportieren (102) mindestens eines auszuleitenden Objekts mittels der Transportvorrichtung (11-26) zu der ersten Ausleitvorrichtung (28); Ausleiten (104) des mindestens einen auszuleitenden Objekts mittels der ersten Ausleitvorrichtung (28) in den mindestens einen ersten Ausleitbehälter (30), wenn der mindestens eine erste Ausleitbehälter (30) nicht vollständig gefüllt ist, ansonsten Transportieren (106) des mindestens eines auszuleitenden Objekts mittels der Transportvorrichtung (11-26) zu der zweiten Ausleitvorrichtung (32). Mit dem Verfahren (100) kann die Effizienz erhöht und die Wahrscheinlichkeit eines Produktionsstillstands verringert werden.

## Beschreibung

Die Erfindung betrifft ein Verfahren und ein System zum Ausleiten mindestens eines auszuleitenden Objekts.

Bei der Produktion und/oder Behandlung von Objekten, beispielsweise von Behältern, können die hergestellten und/oder behandelten Objekte mittels Transportvorrichtungen entlang eines Transportpfads bewegt werden. So können die Objekte beispielsweise zu und/oder von den Herstellungsmaschinen und/oder Behandlungsmaschinen transportiert werden. Bei der Herstellung und/oder Behandlung können jedoch auch fehlerhafte Objekte erzeugt werden, die aus der Produktionslinie ausgeleitet werden.

Aus DE 2009 003 847 A1 ist dazu bekannt, auszuleitende Objekte mittels einer Ausleitvorrichtung auszuleitenden. Diese Objekte können beispielsweise in Sammelbehältern gesammelt werden.

Aus DE 20 2017 107 882 U1 ist weiter bekannt, dass die Sammelbehälter mit Sensoren ausgestattet werden können, die den Füllstand der Sammelbehälter erfassen können. Wenn die Sammelbehälter voll sind, können die Sammelbehälter automatisch geleert und/oder ausgetauscht werden.

Aufgabe der Erfindung ist es, ein Verfahren und ein System zum Ausleiten mindestens eines auszuleitenden Objekts bereitzustellen, das die Effizienz weiter erhöht und die Wahrscheinlichkeit eines Produktionsstillstands weiter verringert.

Die Aufgabe wird durch die Merkmale der unabhängigen Ansprüche gelöst. Vorteilhafte Weiterbildungen sind Gegenstand der abhängigen Ansprüche sowie der folgenden Beschreibung.

Gemäß einem ersten Aspekt wird ein Verfahren zum Ausleiten mindestens eines auszuleitenden Objekts, insbesondere eines Behälters, aus mindestens einer Transportvorrichtung beschrieben, wobei eine erste Ausleitvorrichtung mit mindestens einem ersten Ausleitbehälter und eine zweite Ausleitvorrichtung mit mindestens einem zweiten Ausleitbehälter an der Transportvorrichtung angeordnet sind, wobei die erste Ausleitvorrichtung in einer Transportrichtung vor der zweiten Ausleitvorrichtung angeordnet ist, umfassend zumindest die folgenden Schritte: Transportieren mindestens eines auszuleitenden Objekts mittels der Transportvorrichtung zu der ersten Ausleitvorrichtung; Ausleiten des mindestens einen auszuleitenden Objekts mittels der ersten Ausleitvorrichtung in den mindestens einen ersten Ausleitbehälter, wenn der mindestens eine erste Ausleitbehälter nicht vollständig gefüllt ist, ansonsten Transportieren des mindestens eines auszuleitenden Objekts mittels der Transportvorrichtung zu der zweiten Ausleitvorrichtung.

Mit dem Verfahren können auszuleitende Objekte gezielt in noch nicht vollständig gefüllten Ausleitbehältern gesammelt werden. Wenn das auszuleitende Objekt eine erste Ausleitvorrichtung passiert, deren erster Ausleitbehälter vollständig gefüllt ist, kann das Objekt damit zur nächsten, zweiten Ausleitvorrichtung transportiert werden. Die zweite Ausleitvorrichtung ist dabei in Transportrichtung hinter der ersten Ausleitvorrichtung angeordnet, deren Ausleitbehälter vollständig gefüllt ist. Weiter kann dann der vollständig gefüllte Ausleitbehälter im laufenden Betrieb der Transportvorrichtung ausgetauscht und/oder geleert werden. Auszuleitende Objekte werden dann an der ersten Ausleitvorrichtung, deren erster Ausleitbehälter geleert und/oder getauscht werden kann, vorbei transportiert, um von der nachfolgenden zweiten Ausleitvorrichtung ausgeleitet zu werden. Es können beliebig viele Ausleitvorrichtung entlang der Transportvorrichtung mit jeweils mindestens einem Ausleitbehälter vorgesehen werden. Daher kann das auszuleitende Objekt auch mehrere Ausleitvorrichtungen passieren, wenn deren Ausleitbehälter vollständig gefüllt, getauscht und/oder geleert werden. Durch die Verringerung der Anzahl der Maschinenstopps bzw. Produktionsstopps kann damit die Effizienz der Produktion bzw. Behandlung gesteigert werden und die Wahrscheinlichkeit eines Produktionsstopps bzw. Behandlungsstopps verringert werden.

Gemäß einigen Ausführungsbeispielen ist denkbar, dass das Verfahren vor dem Schritt Ausleiten des mindestens einen auszuleitenden Objekts mittels der ersten Ausleitvorrichtung weiter mindestens folgende Schritte aufweisen kann: Bereitstellen mindestens eines Füllstandsignals mittels mindestens eines Füllstandsensors für den mindestens einen ersten Ausleitbehälter, das zumindest anzeigt, ob der mindestens eine erste Ausleitbehälter vollständig gefüllt ist oder nicht; und Durchführen der Schritte Ausleiten oder Transportieren des mindestens eines auszuleitenden Objekts mittels der Transportvorrichtung zu der zweiten Ausleitvorrichtung basierend auf dem Füllstandsignal.

Der Füllstand des mindestens einen ersten Ausleitbehälters kann damit mittels mindestens eines Füllstandsensors ermittelt werden. Der Füllstandsensor kann ein Füllstandsignal bereitstellen, mit dem angezeigt werden kann, ob der Ausleitbehälter vollständig gefüllt ist oder nicht. Zeigt das Füllstandsignal einen noch nicht vollständig gefüllten ersten Ausleitbehälter an, kann das auszuleitende Objekt von der ersten Ausleitvorrichtung in den ersten Ausleitbehälter ausgeleitet werden. Wenn das Füllstandsignal einen vollständig gefüllten ersten Ausleitbehälter anzeigt, kann das auszuleitende Objekt an der ersten Ausleitvorrichtung vorbei transportiert werden. Ein Benutzer muss daher nicht mehr den Füllstand des ersten Ausleitbehälters überwachen, um das Ausleiten durch die erste Ausleitvorrichtung zu verhindern.

Gemäß einigen Ausführungsbeispielen ist denkbar, dass jeder Ausleitbehälter mindestens einen Füllstandsensor zum Bereitstellen mindestens eines Füllstandsignals umfassen kann, das zumindest anzeigt, ob der jeweilige Ausleitbehälter vollständig gefüllt ist oder nicht, wobei das Verfahren weiter mindestens folgende Schritte aufweisen kann: Bereitstellen mindestens eines Füllstandsignals für jeden Ausleitbehälter; und Anhalten zumindest der Transportvorrichtung, wenn alle Füllstandsignale einen vollständig gefüllten Ausleitbehälter anzeigen.

Damit wird erst dann ein Produktionsstopp durchgeführt, wenn alle Ausleitbehälter, die an der Transportvorrichtung an den jeweiligen Ausleitvorrichtung vorhanden sind, voll sind. Damit kann die Effizienz weiter gesteigert werden.

Gemäß einigen Ausführungsbeispielen ist denkbar, dass das das Verfahren nach dem Anhalten weiter mindestens folgenden Schritt aufweisen kann: Leeren und/oder Austauschen mindestens eines der vollständig gefüllten Ausleitbehälter.

Wie oben bereits erläutert kann das Lehren und/oder Austauschen des mindestens einen vollständig gefüllten Ausleitbehälters im laufenden Betrieb der Transportvorrichtung durchgeführt werden. Die steigert die Effizienz weiter und vermeidet Produktionsstopps.

Gemäß einigen Ausführungsbeispielen ist denkbar, dass das Verfahren weiter mindestens nachfolgenden Schritt aufweisen kann: Unterdrücken mindestens eines Herstellungs- und/oder Behandlungsschritts in mindestens einer Objekt-Herstellungsmaschine und/oder Objekt-Behandlungsmaschine für das mindestens eine auszuleitende Objekt, wenn das mindestens eine auszuleitende Objekt durch die mindestens eine Herstellungs- und/oder Behandlungsmaschine transportiert wird.

Insbesondere in dem Fall, dass ein auszuleitendes Objekt aufgrund eines vollständig gefüllten Ausleitbehälters nicht ausgeleitet wird und in eine Herstellungsmaschine und/oder Behandlungsmaschine einläuft, kann der entsprechende Herstellungsschritt bzw. Behandlungsschritt für das auszuleitende Objekt unterdrückt werden. Die Kosten für den Behandlungsschritt und/oder Herstellungsschritt können durch die Unterdrückung reduziert werden. So kann beispielsweise in einer Etikettiermaschine die Etikettierung eines auszuleitenden Behälters unterdrückt werden. Mit diesem Schritt kann die Effizienz weiter gesteigert und die Kosten weiter reduziert werden.

Gemäß einigen Ausführungsbeispielen ist denkbar, dass das Verfahren weiter mindestens folgenden Schritt aufweisen kann: Ausleiten des mindestens einen auszuleitenden Objekts mittels der zweiten Ausleitvorrichtung in den mindestens einen zweiten Ausleitbehälter, wenn der mindestens eine zweite Ausleitbehälter nicht vollständig gefüllt ist, ansonsten Transportieren des mindestens einen auszuleitenden Objekts mittels der Transportvorrichtung zu mindestens einer dritten Ausleitvorrichtung, die in Transportrichtung hinter der mindestens einen zweiten Ausleitvorrichtung angeordnet ist.

Sofern eine dritte Ausleitvorrichtung an der Transportvorrichtung vorhanden ist, kann damit vermieden werden, dass ein Produktionsstopp stattfinden muss, wenn das auszuleitende Objekt sowohl an der ersten Ausleitvorrichtung als auch in der zweiten Ausleitvorrichtung nicht ausgeleitet werden kann.

Gemäß einigen Ausführungsbeispielen ist denkbar, dass das Verfahren vor dem Schritt Transportieren mindestens eines auszuleitenden Objekts mittels der Transportvorrichtung zu der ersten Ausleitvorrichtung, weiter mindestens folgende Schritte aufweisen kann: Transportieren mindestens eines hergestellten und/oder behandelten Objekts mittels der Transportvorrichtung zu einer ersten Inspektionsvorrichtung, die in Transportrichtung vor der mindestens einen ersten Ausleitvorrichtung angeordnet ist; Inspizieren des mindestens einen hergestellten und/oder behandelten Objekts mittels der mindestens einen ersten Inspektionsvorrichtung; Bereitstellen eines Ausleitsignals für das mindestens eine hergestellte und/oder behandelte Objekts, wenn das mindestens eine hergestellte und/oder behandelte Objekt von der mindestens einen ersten Inspektionsvorrichtung als mindestens ein auszuleitendes Objekt klassifiziert wird.

Das auszuleitende Objekt kann damit durch die Inspektionsvorrichtung als auszuleitende Objekt erkannt werden. Die Inspektionsvorrichtung kann den Ausleitvorrichtungen mitteilen, dass das Objekt an einer entsprechenden Position der Transportvorrichtung ausgeleitet werden soll.

Gemäß einem zweiten Aspekt wird ein System zum Ausleiten mindestens eines auszuleitenden Objekts beschrieben, umfassend mindestens eine Transportvorrichtung, eine erste Ausleitvorrichtung mit mindestens einem ersten Ausleitbehälter, eine zweite Ausleitvorrichtung mit mindestens einem zweiten Ausleitbehälter an der Transportvorrichtung und mindestens eine Steuervorrichtung zum Steuern zumindest der mindestens einen Transportvorrichtung, der ersten Ausleitvorrichtung und der zweiten Ausleitvorrichtung, wobei erfindungsgemäß vorgesehen ist, dass die mindestens eine Steuervorrichtung zum Durchführen des Verfahrens nach einem der vorangegangenen Ansprüche ausgebildet ist.

Gemäß einigen Ausführungsbeispielen ist denkbar, dass das System mindestens einen Füllstandsensor für den mindestens einen ersten Ausleitbehälter aufweisen kann, der zum Bereitstellen mindestens eines Füllstandsignals für den mindestens einen ersten Ausleitbehälter ausgebildet sein kann, wobei das Füllstandsignal zumindest anzeigen kann, ob der mindestens eine erste Ausleitbehälter vollständig gefüllt ist oder nicht.

Vorteile und Wirkungen sowie Weiterbildungen des Systems ergeben sich aus den Vorteilen und Wirkungen sowie Weiterbildungen des oben beschriebenen Verfahrens. Zur Vermeidung von Wiederholungen wird daher in dieser Hinsicht auf die vorangegangene Beschreibung verwiesen.

Gemäß einigen Ausführungsbeispielen ist denkbar, dass der mindestens eine Füllstandsensor als mindestens eine an einem oberen Rand des mindestens einen ersten Ausleitbehälters angeordnete Lichtschranke oder als Zählvorrichtung für in den mindestens einen ersten Ausleitbehälter ausgeleitete Objekte ausgebildet sein kann.

Eine Lichtschranke kann anzeigen, wenn ein Füllstand in dem Ausleitbehälter einen bestimmten Wert erreicht hat. Die Lichtschranke kann in diesem Fall durch das letzte in den Ausleitbehälter geleitete Objekt unterbrochen werden.

Alternativ oder zusätzlich kann die Anzahl der Objekte, die in den entsprechenden Ausleitbehälter ausgeleitet wurden, gezählt werden. Wenn die Anzahl einen bestimmten Schwellenwert überschritten hat, der einer Anzahl entspricht, bei der der Ausleitbehälter vollständig gefüllt ist, kann das Füllstandsignal anzeigen, dass der Ausleitbehälter vollständig gefüllt ist.

Mindestens ein Füllstandsensor kann an jedem Ausleitbehälter des Systems vorgesehen werden.

Gemäß einem dritten Aspekt wird eine Anlage zum Herstellen und/oder Behandeln von Objekten, insbesondere Behältern, beschrieben, umfassend mindestens eine Objekt-Herstellungsmaschine und/oder Objekt-Behandlungsmaschine und mindestens ein System nach der vorangegangenen Beschreibung, wobei die mindestens eine Transportvorrichtung zum Transportieren der Objekte zu und/oder von der mindestens einen Herstellungs- und/oder Behandlungsmaschine ausgebildet ist.

Vorteile und Wirkungen sowie Weiterbildungen der Anlage ergeben sich aus den Vorteilen und Wirkungen sowie Weiterbildungen des oben beschriebenen Verfahrens und des oben beschriebenen Systems. Zur Vermeidung von Wiederholungen wird daher in dieser Hinsicht auf die vorangegangene Beschreibung verwiesen.

Im Folgenden wird die Erfindung anhand einer beispielhaften Ausführungsform mittels der beigefügten Zeichnung beschrieben. Es zeigen:
- Figur 1: ein Flussdiagramm des Verfahrens Ausleiten mindestens eines auszuleitenden Objekts;
- Figur 2: eine schematische Darstellung einer Anlage zum Herstellen und/oder Behandeln von Objekten; und
- Figur 3: eine schematische Darstellung eines Ausleitbehälters.

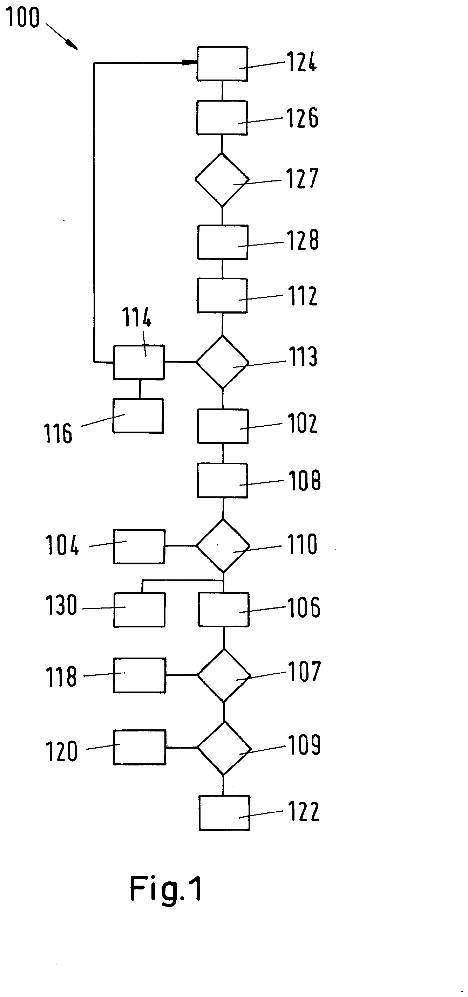

Das Verfahren zum Ausleiten mindestens eines auszuleitenden Objekts aus mindestens einer Transportvorrichtung wird in seiner Gesamtheit mit dem Bezugszeichen 100 bezeichnet. Das auszuleitende Objekt kann beispielsweise ein Behälter, insbesondere ein Kunststoff-Behälter, sein. Ein Flussdiagramm des Verfahrens ist in Figur 1 dargestellt.

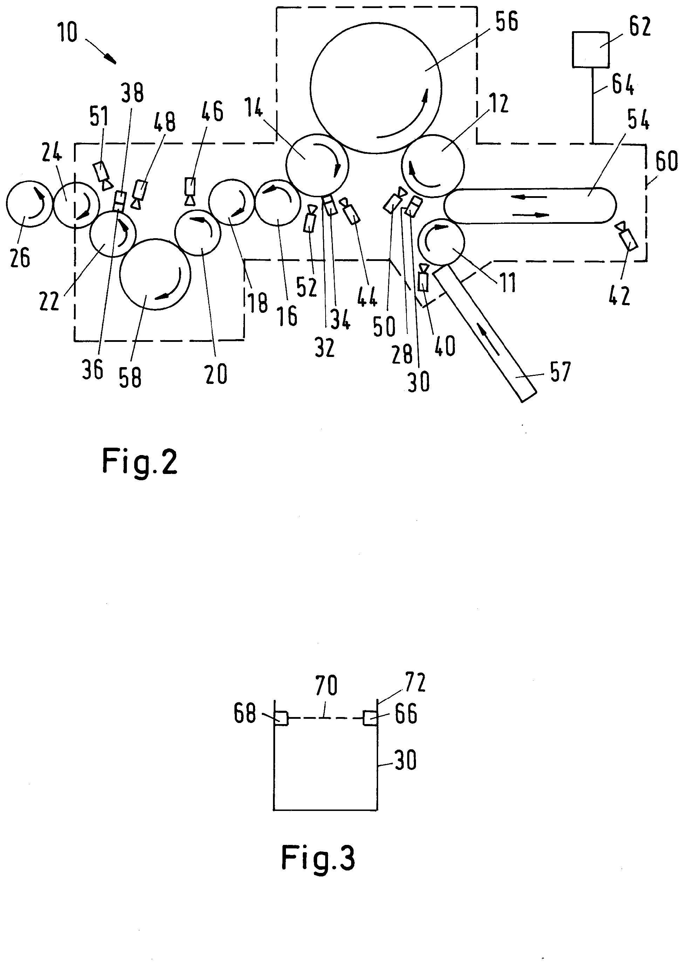

Das Verfahren 100 kann an einer Anlage 10 zum Herstellen und/oder behandeln mindestens eines Objekts, wie sie in Figur 2 schematisch dargestellt ist, durchgeführt werden. Die Objekte werden dabei durch die Anlage 10 mittels einer Transportvorrichtung 11-26 transportiert. Die Transportvorrichtung 11-26 kann beispielsweise eine Vielzahl von Transporträdern und oder anderen Transportgeräten aufweisen.

Der Transport mittels der Transportvorrichtung 11-26 kann entlang einer Transportrichtung durchgeführt werden, die in Figur 2 mit Pfeilen markiert ist. An der Transportvorrichtung 11-26 kann mindestens eine erste Inspektionsvorrichtung 42 angeordnet sein.

Die Objekte können gemäß einem ersten optionalen Schritt 124 durch die Transportvorrichtung 11-26 an der ersten Inspektionsvorrichtung 42 vorbei transportiert werden. Während des Transports an der ersten Inspektionsvorrichtung 42 vorbei, kann die erste Inspektionsvorrichtung 42 die Objekte gemäß dem weiteren optionalen Schritt 126 inspizieren.

Wenn ein inspiziertes Objekt während eines weiteren optionalen Schritt 127 als nicht in Ordnung klassifiziert wird, kann es als auszuleitendes Objekt kategorisiert werden. Die erste Inspektionsvorrichtung 42 kann dann ein Ausleitsignal bereitstellen, das dem auszuleitenden Objekt gemäß Schritt 128 zugeordnet werden kann. Das Ausleitsignal kann einer Steuerungsvorrichtung 62 übermittelt werden, die über eine Signalverbindung 64 mit der Anlage 10 bzw. den von der Anlage 10 umfassten Vorrichtungen signaltechnisch verbunden sein kann. Die Signalverbindung 64 kann kabellos oder kabelgebunden ausgebildet sein.

Die Steuervorrichtung 62 kann dazu ausgebildet sein, die Position des auszuleitenden Objekts während des Transports zu verfolgen.

Die Anlage 10 kann weiter mindestens eine erste Ausleitvorrichtung 28 aufweisen, die mindestens einen Ausleitbehälter 30 aufweisen kann. Die erste Ausleitvorrichtung 28 kann dazu ausgebildet sein, auszuleitende Objekte in den ersten Ausleitbehälter 30 auszuleiten. Die erste Ausleitvorrichtung 28 kann gemäß dem vorliegenden Ausführungsbeispiel in Transportrichtung die nächste Ausleitvorrichtung nach der ersten Inspektionseinrichtung 42 sein.

Zumindest die Transporträder 12, 14, die erste Ausleitvorrichtung 28 mit dem ersten Ausleitbehälter 30 und die zweite Ausleitvorrichtung 32 mit dem zweiten Ausleitbehälter 34 können Teil eines Systems zum Ausleiten mindestens eines auszuleitenden Objekts sein.

Der erste Ausleitbehälter 30 kann mindestens einen Füllstandsensor 68 aufweisen. Der Füllstandsensor 68 kann zum Bereitstellen mindestens eines Füllstandsignals ausgebildet sein. Das Füllstandsignal kann zumindest anzeigen, ob der erste Ausleitbehälter 30 vollständig gefüllt ist oder nicht.

Die Anlage 10 kann in Transportrichtung hinter der ersten Ausleitvorrichtung 28 mindestens eine zweite Ausleitvorrichtung 32 mit mindestens einem zweiten Ausleitbehälter 34 aufweisen. Weiter kann die Anlage 10 in Transportrichtung hinter der zweiten Ausleitvorrichtung 32 mindestens eine dritte Ausleitvorrichtung 36 mit mindestens einem dritten Ausleitbehälter 38 aufweisen.

Die Transportvorrichtung 11-26 kann Objekte von einer Zuführvorrichtung 57 erhalten, die beispielsweise einen Vorformlingsstrom für die herzustellenden Behälter bereitstellen kann. Weiter kann eine initiale Überwachungsvorrichtung 40 überwachen, ob die Zuführung korrekt erfolgt.

Mittels eines ersten Transportrads 11 können die Vorformlinge vereinzelt und einer Heizstrecke einer als Heizvorrichtung ausgebildeten Objekt-Behandlungsmaschine 54 zum thermischen Konditionieren der Vorformlinge zugeführt werden. Eine erste Inspektionsvorrichtung 42 kann in der Heizstrecke angeordnet sein, um die thermische Konditionierung zu prüfen.

Aus der Objekt-Behandlungsmaschine 54 können die Objekte dann einem zweiten Transportrad 12 zugeführt werden, an der die erste Ausleitvorrichtung 28 angeordnet sein kann. Das Ausleiten mittels der ersten Ausleitvorrichtung 28 kann mittels einer ersten Ausleit-Überwachungsvorrichtung 50 überwacht werden.

Das zweite Transportrad 12 kann die Objekte, insbesondere die thermisch konditionierten Vorformlinge, einer Objekt-Herstellungsmaschine 56 bereitstellen, die beispielsweise eine Streckblasmaschine oder eine Formfüllmaschine zum Umformen von Vorformlingen zu Behältern sein kann.

Die hergestellten Objekte bzw. Behälter können dann von einem dritten Transportrad 14 aufgenommen werden. An dem dritten Transportrad 14 kann die zweite Ausleitvorrichtung 32 angeordnet sein. In Transportrichtung vor der zweiten Ausleitvorrichtung 32 kann eine zweite Inspektionsvorrichtung 44 angeordnet sein. Weiter kann in Transportrichtung nach der zweiten Ausleitvorrichtung 32 eine zweite Ausleit-Überwachungsvorrichtung 52 zum Überwachen des Ausleitprozesses an der zweiten Ausleitvorrichtung 32 angeordnet sein.

Die Objekte können dann mittels der Transporträder 16, 18, 20 dazu einer weiteren Objekt-Behandlungsmaschine 58, beispielsweise einer Füllmaschine und/oder eine Etikettiermaschine und/oder eine Sterilisationsmaschine transportiert werden. An dem mit dem Referenzzeichen20 bezeichneten Transportrad kann eine weitere Überwachungsvorrichtung 46 angeordnet sein.

Von der weiteren Objekt-Behandlungsmaschine 58 können die Objekte mittels weiterer Transporträder 22, 24, 26 weiter transportiert werden. An dem mit dem Referenzzeichen 22 bezeichneten Transportrad kann eine dritte Inspektionsvorrichtung 48 angeordnet sein. In Transportrichtung hinter der dritten Inspektionsvorrichtung 48 kann die dritte Ausleitvorrichtung 36 mit dem dritten Ausleitbehälter 38 angeordnet sein. Der Ausleitprozess der dritten Ausleitvorrichtung 36 kann mittels einer dritten Ausleit-Überwachungsvorrichtung 51 überwacht werden.

Die Anlage 10 kann ein Gehäuse 60 aufweisen, in dem die Objekt-Behandlungsmaschinen 54, 58 und/oder die Objekt-Herstellungsmaschine 56 mit einem Großteil der Transportvorrichtung 11-26 eingehaust sein kann. Ebenso können die Inspektionsvorrichtungen 42-48 und die Ausleitvorrichtungen 28, 32, 36 in dem Gehäuse 60 angeordnet sein.

Figur 3 zeigt beispielhaft den ersten Ausleitbehälter 30 mit einem Füllstandsensor 68. In diesem Ausführungsbeispiel ist der Füllstandsensor 68 als Empfänger für eine Lichtschranke 70 ausgebildet, die von einem entsprechenden Lichtemitter 66 bereitgestellt wird. Der Füllstandsensor 68 kann dazu an einem oberen Rand 72 des Ausleitbehälters 30 angeordnet sein.

In einem alternativen oder zusätzlichen Ausführungsbeispiel kann der Füllstandsensor 68 die Anzahl der Objekte zählen, die in dem ersten Ausleitbehälter 30 ausgeleitet werden. Bei Überschreiten eines Schwellenwerts kann angezeigt werden, dass der erste Ausleitbehälter 30 vollständig gefüllt ist.

Füllstandsensoren 68 können an jedem Ausleitbehälter der Anlage 10 vorgesehen sein.

In einem weiteren optionalen Schritt 112 kann von jedem Ausleitbehälter mindestens ein Füllstandsignal bereitgestellt werden. Das mindestens ein Füllstandsignal jedes Ausleitbehälters kann von der Steuervorrichtung 62 empfangen werden. Wenn während eines weiteren optionalen Schritts 113 im Rahmen einer Prüfung alle Füllstandsignale anzeigen, dass die Ausleitbehälter gefüllt sind, kann die Steuervorrichtung 62 gemäß dem optionalen Schritt 114 die Anlage 10 stoppen oder andere geeignete Maßnahmen ergreifen.

In einem weiteren optionalen Schritt 116 kann dann mindestens einer der Ausleitbehälter geleert und/oder ausgetauscht werden. Sofern der Füllstandsensor 38 die Anzahl der ausgeleiteten Objekte in dem entsprechenden Ausleitbehälter zählt, kann der Zählerstand dann zurückgesetzt werden.

Weiter kann das auszuleitende Objekt gemäß Schritt 102 nach der Inspektion mittels der Transportvorrichtung 11-26 zu der ersten Ausleitvorrichtung 28 transportiert werden. Der Transport des auszuleitenden Objekts kann dabei wie der Transport aller anderen Objekte erfolgen, die nicht ausgeleitet werden sollen.

In einem weiteren optionalen Schritt 108 kann das mindestens eine Füllstandsignal von dem Füllstandsensor 68 des mindestens ein ersten Ausleitbehälters 28 bereitgestellt werden. Falls vorher der oben erläuterte, optionale Schritt 112 durchgeführt wurde, kann das entsprechende Füllstandsignal verwendet werden, das dem mindestens einen ersten Ausleitbehälter 28 zugeordnet wurde. Ansonsten kann unabhängig von den anderen Füllstandsignalen der anderen Ausleitbehälter das mindestens eine Füllstandsignal des mindestens einen ersten Ausleitbehälters 28 bereitgestellt werden.

Wenn das Füllstandsignal des ersten Ausleitbehälters 30 im Rahmen einer Prüfung gemäß dem optionalen Schritt 110 anzeigt, dass der erste Ausleitbehälter 30 nicht vollständig gefüllt ist, kann das mindestens eine auszuleitende Objekt gemäß Schritt 104 in den mindestens ein ersten Ausleitbehälter 30 ausgeleitet werden. Das Ausleiten kann mittels der ersten Ausleitvorrichtung 28 erfolgen.

Wenn das Füllstandsignal des ersten Ausleitbehälters 30 im optionalen Schritt 110 anzeigt, dass der erste Ausleitbehälter 30 vollständig gefüllt ist, kann das mindestens eine auszuleitende Objekt gemäß Schritt 106 zu der mindestens einen zweiten Ausleitvorrichtung 32 transportiert werden.

Weiter kann gemäß einem optionalen Schritt 130 der mindestens eine erste Ausleitbehälter 30 ausgeleert und/oder ausgetauscht werden. Dazu kann beispielsweise ein Wartungssignal für den mindestens einen ersten Ausleitbehälter 30 bereitgestellt werden. Der optionale Schritt 130 kann im laufenden Betrieb der Anlage 10 durchgeführt werden. Ein Stillstand der Maschine für den Austausch des mindestens einen ersten Ausleitbehälters 30 ist nicht notwendig. Dies kann für alle Ausleitbehälter der Anlage 10 gelten, wenn zumindest ein in Transportrichtung nachfolgender Ausleitbehälter nicht vollständig gefüllt ist.

Im Rahmen einer Prüfung in dem optionalen Schritt 107 kann ermittelt werden, ob der auszuleitende Behälter mindestens eine Objekt-Herstellungsmaschine 56 und/oder Objekt-Behandlungsmaschine 54, 58 der Anlage 10 passieren wird bzw. durch sie hindurchtransportiert werden wird. Falls dem so ist, kann gemäß einem weiteren optionalen Schritt 118 mindestens ein Herstellungs- und/oder Behandlungsschritt in der entsprechenden Objekt-Herstellungsmaschine 56 bzw. Objekt-Behandlungsmaschine 54, 58 unterdrückt werden. So kann vermieden werden, dass an einem auszuleitenden Objekt in eine Objekt-Behandlungsmaschine 54, 58 eine Behandlung, beispielsweise eine Etikettierung, einen Füllprozess oder eine Sterilisation, durchgeführt wird. In eine Objekt-Herstellungsmaschine 56 kann vermieden werden, dass ein fehlerhafter Vorformling zu einem Behälter umgeformt wird. Die Kosten für den entsprechenden Herstellungsschritt bzw. Behandlungsschritt können damit reduziert werden und es werden keine unnötigen Ressourcen für ein auszuleitendes Objekt verbraucht.

Wenn die Objekte Behälter, insbesondere Behälter aus thermoplastischem Kunststoff, sind, kann die Objekt-Herstellungsmaschine 56 eine Streckblasmaschine oder eine Formfüllmaschine sein. Weiter können die Objekt-Behandlungsmaschinen 54, 58 eine Heizvorrichtung zum thermischen Konditionieren von Vorformlingen der Behälter oder eine Sterilisationsmaschine, Etikettiermaschine oder Füllmaschine für die Behälter sein.

In einem weiteren optionalen Schritt 109 kann geprüft werden, ob der mindestens eine zweite Ausleitbehälter 34 einer zweiten Ausleitvorrichtung 32 vollständig gefüllt ist. Dies kann mittels eines Füllstandsignals erfolgen, insbesondere mittels eines Füllstandsensors an dem mindestens einen zweiten Ausleitbehälter 34.

Zeigt das Füllstandsignal des zweiten Ausleitbehälters 34 an, dass dieser nicht vollständig gefüllt ist, kann gemäß dem optionalen Schritt 120 der auszuleitende Behälter mittels der zweiten Ausleitvorrichtung 32 in den mindestens einen zweiten Ausleitbehälter 34 ausgeleitet werden.

Wenn das Füllstandsignal des zweiten Ausleitbehälters 34 anzeigt, dass dieser vollständig gefüllt ist, kann gemäß dem weiteren optionalen Schritt 122 das mindestens eine auszuleitende Objekt zu der mindestens einen dritten Ausleitvorrichtung 36 transportiert werden. Dort kann ebenfalls eine Prüfung stattfinden, ob der entsprechende mindestens eine dritte Ausleitbehälter 38 vollständig gefüllt ist oder nicht.

Das oben beschriebene Beispiel dient in keiner Weise einer Beschränkung der Erfindung. Vielmehr kann die Erfindung in vielfältiger Weise abgewandelt werden. Alle oben beschriebenen Merkmale der Erfindung können allein oder in Kombination miteinander wesentlich für die Erfindung sein.

### Bezugszeichenliste

- 10: Anlage
- 11: Transportvorrichtung
- 12: Transportvorrichtung
- 14: Transportvorrichtung
- 16: Transportvorrichtung
- 18: Transportvorrichtung
- 20: Transportvorrichtung
- 22: Transportvorrichtung
- 24: Transportvorrichtung
- 26: Transportvorrichtung
- 28: Ausleitvorrichtung
- 30: Ausleitbehälter
- 32: Ausleitvorrichtung
- 34: Ausleitbehälter
- 36: Ausleitvorrichtung
- 38: Ausleitbehälter
- 40: initiale Überwachungsvorrichtung
- 42: Inspektionsvorrichtung
- 44: Inspektionsvorrichtung
- 46: Inspektionsvorrichtung
- 48: Inspektionsvorrichtung
- 50: Ausleit-Überwachungsvorrichtung
- 51: Ausleit-Überwachungsvorrichtung
- 52: Ausleit-Überwachungsvorrichtung
- 54: Objekt-Behandlungsmaschine
- 56: Objekt-Herstellungsmaschine
- 57: Zuführvorrichtung
- 58: Objekt-Behandlungsmaschine
- 60: Gehäuse
- 62: Steuervorrichtung
- 64: Signalverbindung
- 66: Lichtemitter
- 68: Füllstandsensor
- 70: Lichtschranke
- 72: oberer Rand

## Patentansprüche

1. Verfahren (100) zum Ausleiten mindestens eines auszuleitenden Objekts, insbesondere eines Behälters, aus mindestens einer Transportvorrichtung (11-26), wobei eine erste Ausleitvorrichtung (28) mit mindestens einem ersten Ausleitbehälter (30) und eine zweite Ausleitvorrichtung (32) mit mindestens einem zweiten Ausleitbehälter (34) an der Transportvorrichtung (11-26) angeordnet sind, wobei die erste Ausleitvorrichtung (28) in einer Transportrichtung vor der zweiten Ausleitvorrichtung (32) angeordnet ist, umfassend zumindest die folgenden Schritte:
- Transportieren (102) mindestens eines auszuleitenden Objekts mittels der Transportvorrichtung (11-26) zu der ersten Ausleitvorrichtung (28);
- Ausleiten (104) des mindestens einen auszuleitenden Objekts mittels der ersten Ausleitvorrichtung (28) in den mindestens einen ersten Ausleitbehälter (30), wenn der mindestens eine erste Ausleitbehälter (30) nicht vollständig gefüllt ist, ansonsten Transportieren (106) des mindestens eines auszuleitenden Objekts mittels der Transportvorrichtung (11-26) zu der zweiten Ausleitvorrichtung (32).

2. Verfahren (100) nach Anspruch 1, **dadurch gekennzeichnet, dass** das Verfahren (100) vor dem Schritt Ausleiten des mindestens einen auszuleitenden Objekts mittels der ersten Ausleitvorrichtung (28) weiter mindestens folgende Schritte aufweist:
- Bereitstellen (108) mindestens eines Füllstandsignals mittels mindestens eines Füllstandsensors (68) für den mindestens einen ersten Ausleitbehälter (30), das zumindest anzeigt, ob der mindestens eine erste Ausleitbehälter (30) vollständig gefüllt ist oder nicht; und
- Durchführen (110) der Schritte Ausleiten (104) oder Transportieren (106) des mindestens eines auszuleitenden Objekts mittels der Transportvorrichtung (11-26) zu der zweiten Ausleitvorrichtung (32) basierend auf dem Füllstandsignal.

3. Verfahren (100) nach Anspruch 1 oder 2, **dadurch gekennzeichnet, dass** jeder Ausleitbehälter mindestens einen Füllstandsensor (68) zum Bereitstellen mindestens eines Füllstandsignals umfasst, das zumindest anzeigt, ob der jeweilige Ausleitbehälter vollständig gefüllt ist oder nicht, wobei das Verfahren (100) weiter mindestens folgende Schritte aufweist:
- Bereitstellen (112) mindestens eines Füllstandsignals für jeden Ausleitbehälter; und
- Anhalten (114) zumindest der Transportvorrichtung (11-26), wenn alle Füllstandsignale einen vollständig gefüllten Ausleitbehälter anzeigen.

4. Verfahren (100) nach Anspruch 3, **dadurch gekennzeichnet, dass** das Verfahren (100) nach dem Schritt Anhalten (114) weiter mindestens folgenden Schritt aufweist:
- Leeren (116) und/oder Austauschen mindestens eines der vollständig gefüllten Ausleitbehälter.

5. Verfahren (100) nach einem der vorangegangenen Ansprüche, **dadurch gekennzeichnet, dass** das Verfahren (100) weiter mindestens nachfolgenden Schritt aufweist:
- Unterdrücken (118) mindestens eines Herstellungs- und/oder Behandlungsschritts in mindestens einer Objekt-Herstellungsmaschine (56) und/oder Objekt-Behandlungsmaschine (54, 58) für das mindestens eine auszuleitende Objekt, wenn das mindestens eine auszuleitende Objekt durch die mindestens eine Herstellungs- und/oder Behandlungsmaschine (54-58) transportiert wird.

6. Verfahren (100) nach einem der vorangegangenen Ansprüche, **dadurch gekennzeichnet, dass** das Verfahren (100) weiter mindestens folgenden Schritt aufweist:
- Ausleiten (120) des mindestens einen auszuleitenden Objekts mittels der zweiten Ausleitvorrichtung (32) in den mindestens einen zweiten Ausleitbehälter (34), wenn der mindestens eine zweite Ausleitbehälter (34) nicht vollständig gefüllt ist, ansonsten Transportieren (122) des mindestens einen auszuleitenden Objekts mittels der Transportvorrichtung (11-26) zu mindestens einer dritten Ausleitvorrichtung (36), die in Transportrichtung hinter der mindestens einen zweiten Ausleitvorrichtung (32) angeordnet ist.

7. Verfahren (100) nach einem der vorangegangenen Ansprüche, **dadurch gekennzeichnet, dass** das Verfahren (100) vor dem Schritt Transportieren mindestens eines auszuleitenden Objekts mittels der Transportvorrichtung (11-26) zu der ersten Ausleitvorrichtung (28), weiter mindestens folgende Schritte aufweist:
- Transportieren (124) mindestens eines hergestellten und/oder behandelten Objekts mittels der Transportvorrichtung (11-26) zu einer ersten Inspektionsvorrichtung (42), die in Transportrichtung vor der mindestens einen ersten Ausleitvorrichtung (28) angeordnet ist;
- Inspizieren (126) des mindestens einen hergestellten und/oder behandelten Objekts mittels der mindestens einen ersten Inspektionsvorrichtung (42);
- Bereitstellen (128) eines Ausleitsignals für das mindestens eine hergestellte und/oder behandelte Objekts, wenn das mindestens eine hergestellte und/oder behandelte Objekt von der mindestens einen ersten Inspektionsvorrichtung (42) als mindestens ein auszuleitendes Objekt klassifiziert wird.

8. System zum Ausleiten mindestens eines auszuleitenden Objekts, umfassend mindestens eine Transportvorrichtung (11-26), eine erste Ausleitvorrichtung (28) mit mindestens einem ersten Ausleitbehälter (30), eine zweite Ausleitvorrichtung (32) mit mindestens einem zweiten Ausleitbehälter (34) an der Transportvorrichtung (11-26) und mindestens eine Steuervorrichtung (62) zum Steuern zumindest der mindestens einen Transportvorrichtung (11-26), der ersten Ausleitvorrichtung (28) und der zweiten Ausleitvorrichtung (32), **dadurch gekennzeichnet, dass** die mindestens eine Steuervorrichtung (62) zum Durchführen des Verfahrens (100) nach einem der vorangegangenen Ansprüche ausgebildet ist.

9. System nach Anspruch 8, **dadurch gekennzeichnet, dass** das System mindestens einen Füllstandsensor (68) für den mindestens einen ersten Ausleitbehälter (30) aufweist, der zum Bereitstellen mindestens eines Füllstandsignals für den mindestens einen ersten Ausleitbehälter (30) ausgebildet ist, wobei das Füllstandsignal zumindest anzeigt, ob der mindestens eine erste Ausleitbehälter (30) vollständig gefüllt ist oder nicht.

10. System nach Anspruch 9, **dadurch gekennzeichnet, dass** der mindestens eine Füllstandsensor (68) als mindestens eine an einem oberen Rand (72) des mindestens einen ersten Ausleitbehälters (30) angeordnete Lichtschranke (70) oder als Zählvorrichtung für in den mindestens einen ersten Ausleitbehälter (30) ausgeleitete Objekte ausgebildet ist.

11. Anlage (10) zum Herstellen und/oder Behandeln von Objekten, insbesondere Behältern, umfassend mindestens eine Objekt-Herstellungsmaschine (56) und/oder Objekt-Behandlungsmaschine (54, 58) und mindestens ein System nach einem der Ansprüche 8 bis 10, wobei die mindestens eine Transportvorrichtung (11-26) zum Transportieren der Objekte zu und/oder von der mindestens einen Herstellungs- und/oder Behandlungsmaschine (54-58) ausgebildet ist.
